# EUROPEAN PATENT SPECIFICATION

(11) **EP 2 017 118 B1**
(45) Date of publication and mention of the grant of the patent: **14.05.2014**
(21) Application number: 08159353.5
(22) Date of filing: 30.06.2008
(51) Int. Cl.: B60M 1/06, B60M 3/04

(54) **Railway infrastructure**
Schieneninfrastruktur
Infrastructure de rail de train

(30) Priority: 17.07.2007 NL 2000756
(43) Date of publication of application: 21.01.2009
(73) Proprietor: Technische Universiteit Delft, 2628 CN Delft (NL)
(72) Inventor: Kruit, Pieter, 2611 EB Delft (NL); Van Overbeeke, Frank, 3065 LG Rotterdam (NL); Gravendeel, Bas, 3123 CM Schiedam (NL)
(74) Representative: Van Breda, Jacobus

(56) References cited:
- DE-A1- 19 903 041
- SU-A1- 1 425 109
- US-A- 5 825 101

## Description

The invention relates to a railway infrastructure for a tram- or train transport system, comprising rails, and an overhead contact line for providing the tram or train movable over the rails with an electrical drive power.

Such a railway infrastructure is known from the European Patent EP-A-1 072 463.

With tram or train traction over the rails, the overhead contact line and the rails are live, causing a magnetic field to be generated. In the European Patent EP-A-1 072 463 said magnetic field is compensated in a delimited and predetermined section travelled by the train by using a compensation device. This compensation device is formed by an electrical separation of the rails in the compensation area from those outside the compensation area, and by carrying the return current of the drive current conducted to the tram or train via the overhead contact line back to the electrical source via a separate conductor running adjacent to the overhead contact line. This accomplishes that as long as the train is outside the area to be compensated, the magnetic field generated by the current through the overhead contact line can be compensated via the return current through the conductor adjacent to the overhead contact line.

From the American Patent US-A-5,825,101 a railway infrastructure for a tram or train transport system is known that comprises rails and an overhead contact line for the supply of an electric drive current to a tram or train moving over the rails, which overhead contact line comprises overhead contact line sections connected to each other, each of which are individually connected to at least one feeder cable. The electrical installation known from this publication has the drawback that separate compensation circuits are required to compensate the magnetic field generated by the drive current. These compensation circuits can only be switched on or off and merely provide a not always complete compensation of the drive current of a single tram or train. Moreover, no compensation takes place within the section comprising the tram or train.

It is the object of the invention to provide an alternative apparatus with which advantages can be gained that will become apparent from the following.

To this end the railway infrastructure according to the invention is characterized by one or several of the appended claims.

In a first aspect, the railway infrastructure according to the invention is characterized in that each separate overhead contact line section is at its two ends provided with couplers, and in that the couplers of such overhead contact lines are at one point connected with the at least one feeder cable.

In this way the magnetic field generated within such a section comprising the tram or train can be compensated due to the fact that the respective overhead contact line section at both sides of the tram or train is live in the direction of the tram or train. These oppositely directed currents generate likewise oppositely directed magnetic fields that can thus cancel each other. The additional fact that the couplers of the section are at one point connected with the at least one feeder cable, avoids the possibility of a return current from a tram or train running partly via the overhead contact line.

Moreover, as it is in general only necessary for the overhead contact line section comprising the train or tram to be live, the magnetic field can be reduced considerably.

It is desirable that couplers are provided between the overhead contact line sections and the at least one feeder cable, whose electrical resistance is at least one magnitude lower than the electrical resistance of each separate overhead contact line section. In this way the distribution of current in the overhead contact line section is hardly affected by the resistance of the couplers, but is substantially inversely proportional to the ratio of distance between the place where the tram or train taps electricity from the overhead contact line section and the distance between this position and the two ends of the overhead contact line sections.

The railway infrastructure may be realised in various embodiments.

A first preferred embodiment is characterized in that the linked overhead contact line sections are electrically coupled, and in that the at least one feeder cable possesses an electrical resistance that is at least one magnitude lower than the electrical resistance of the overhead contact line. Especially with this embodiment, the electrical resistance of the feeder cable should be considerably lower than that of the overhead contact line in order to ensure that the current through the overhead contact line will be concentrated in the overhead contact line section comprising the tram or train. This exemplary embodiment will not be further elucidated hereinafter because the manner in which this may be realised is quite obvious to the person skilled in the art, and requires no further explanation.

A second preferred embodiment that will, however, be further elucidated relates to the embodiment in which the linked overhead contact line sections are electrically insulated from each other. For the electrical insulation of the overhead contact line sections it is also possible to use the standard overhead line breakers, which are known to the person skilled in the art.

The railway infrastructure is advantageously embodied such that the feeder cable is located at the level of the rails. In this way it becomes possible to compensate the magnetic field generated by the drive current conducted through the feeder cable by means of the return current conducted through the rails.

It is preferred for the feeder cable to be provided between the rails. The object of this is to have the feeder cable coincide with an imaginary centre line of current, which is determined by all the tracks together.

Further advantageous embodiments include, for example, the use of an electrically insulating material applied underneath the rails and providing insulation with regard to the material on which the rails rest. This is an effective way of avoiding current leakage which would have an adverse effect on the accuracy of the magnetic field reduction.

Hereinafter the invention will be further elucidated by way of the above mentioned second preferred embodiment of a railway infrastructure according to the invention, and with reference to the drawing. As this explanation by way of this exemplary embodiment merely serves to remove possible ambiguities in the patent claims as well as to clarify each of these claims, it will be obvious that this preferred embodiment does not limit the protective scope of the patent claims, and in particular, that not all the illustrated features need to be present in order to fulfil the essence of the invention and forming the basic principle of the appended claims.

The drawings show in:
- Figure 1, a single section of a railway infrastructure according to the invention;
- Figure 2, a schematic side view of a railway infrastructure according to the invention.

Identical reference numbers in the figures refer to similar parts.

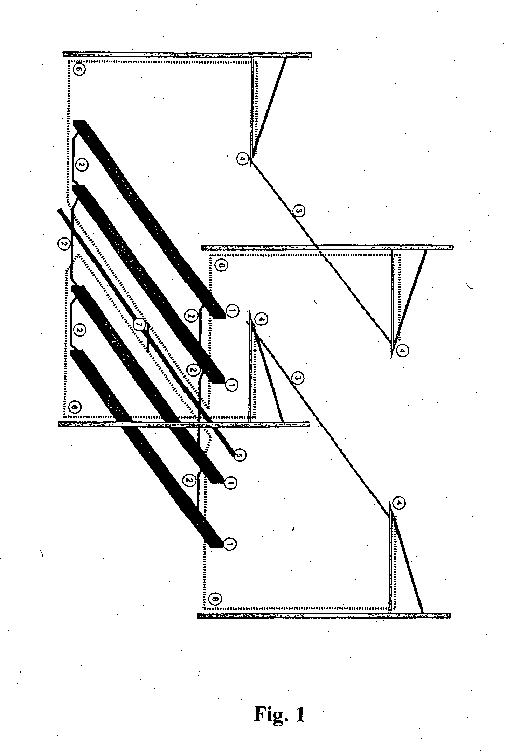

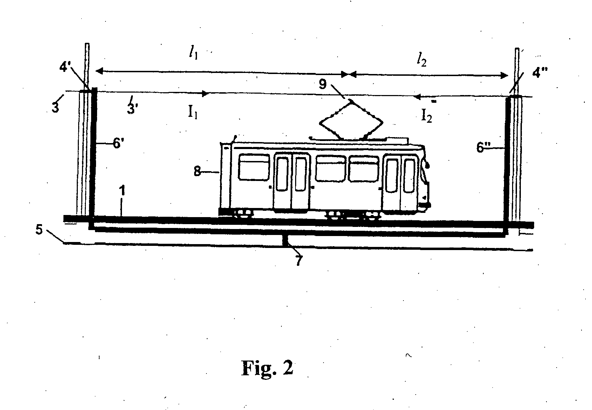

Linked to both sides of the section shown in Figure 1 are similar sections, which together form a complete railway infrastructure for a tram or train transport system as shown, for example, in Figure 2.

Referring first to Figure 2 of the drawing, the railway infrastructure according to the invention is shown to comprise rails 1 and an overhead contact line 3 for providing an electrical drive current for a tram or train 8 moveable over the rails 1.

The compensation for the magnetic field created by the electrical drive current conducted through the overhead contact line sections 3, 3' and a corresponding return current through the rails 1 will be explained below.

As shown in Figure 2, the overhead contact line is divided into overhead contact line sections 3, 3' with the ends 4', 4" of these overhead contact line sections 3, 3' being at both sides provided with circuit breakers that form an insulation from the adjacent overhead contact line sections. The person skilled in the art is well acquainted with such circuit breakers.

Figure 1 shows the preferred embodiment of a single overhead contact line section 3, which is at both ends 4 connected with a feeder cable 5.

The feeder cable 5 is located at the level of the rails 1 and between these rails 1 and, via substantially vertically oriented couplers 6, feeds the overhead contact line section 3 via its two ends 4. This also applies to the overhead contact line sections located at both sides of the illustrated overhead contact line section 3, such that each overhead contact line section is independently coupled with the feeder cable 5.

The vertically oriented couplers 6 are fed from one single branching point 7 that is connected to the feeder cable 5. From this branching point 7, connecting lines (represented as dotted lines) run parallel to the feeder cable 5 and link up with the substantially vertically oriented couplers 6.

Figure 1 further shows that the rails 1 are provided with electric cross-connections 2, whose resistance is such that the return current conducted through the rails 1 is quickly and evenly distributed over the available rails 1.

As explained above, the two substantially vertically oriented couplers 6, which at the ends 4 supply the overhead contact line section 3 with electricity, are coupled with the feeder cable 5 at one and the same point. As a result, the overhead contact line section 3 is only live when there is a tram or train 8 in the respective section.

The electricity is distributed over the two substantially vertically oriented couplers 6 in proportion to the electrical resistance of the two live circuits within the respective section, comprising the tram or train. Embodying the couplers 6 such that their electrical resistance is at least one magnitude lower than the electrical resistance of the overhead contact line section 3, achieves that the distribution of electricity in the overhead contact line sections located at both sides of the tram or train, is inversely proportional to the ratio of distance between the position where the tram or train taps electricity from the overhead contact line section 3, and the two ends 4 at both sides of this electrical tap point. This can be explained in more detail with reference to Figure 2.

Figure 2 shows connected overhead contact line sections 3, 3', which are separated from each other at the ends 4', 4" by means of electrical insulators.

The overhead contact line section 3' is only live at the position where a train 8 is tapping electricity from an overhead contact line section 3'. There is no electricity-tapping train at the other overhead contact line sections 3, consequently these overhead contact line sections 3 are dead and do not generate a magnetic field.

The overhead contact line section 3' is fed via couplers 6', 6" from a feeder cable (not shown) located near the rails 1. These couplers 6', 6 " connect to the ends 4', 4 " of the overhead contact line section 3' and thus provide both with a feed current 11 and 12, respectively, which together provide the total drive current I for the train 8. The distribution of the drive current I over the parts 11 and 12 that converge at the power tap point 9 occurs automatically in proportion to the direct-current resistance of the first current circuit and the second current circuit in this section, with the first circuit running from the power tap point of the feeder cable via the coupler 6' to the current tap point 9, and the second circuit running from the power tap point of the feeder cable via the other coupler 6 " to the power tap point 9.

By imparting on the two couplers 6', 6", including the portion that runs from the power tap point of the feeder cable, an electrical resistance of a lower magnitude than the electrical resistance of the overhead contact line section 3', the currents 11 and 12 are inversely proportional to the distance between the power tap point 9 and the one end 4' or the other end 4", respectively, of the overhead contact line section 3'.

In this way the currents 11 and 12 are continually adjusted while the train 8 is in motion, with the result that they effectively compensate the magnetic fields generated by the two currents. In addition it is worth noting that by placing the feeder cable at the level of the rails 1, the magnetic field caused by the drive current conducted through this feeder cable is compensated by the return current conducted through the adjacent rails 1.

## Claims

1. A railway infrastructure for a tram- or train transport system, comprising rails (1), and an overhead contact line (3) for providing the tram or train movable over the rails (1) with an electrical drive power, which overhead contact line (3) comprises overhead contact line sections (3, 3') connected to each other, each of which are individually connected with at least one feeder cable (5), **characterised in that** each separate overhead contact line section (3, 3') is at its two ends (4, 4', 4") provided with couplers (6', 6"), which are at one point (7) connected with the at least one feeder cable (5).

2. A railway infrastructure according to claim 1, **characterised in that** couplers (6) are provided between the overhead contact line sections (3, 3') and the at least one feeder cable (5), whose electrical resistance is at least one magnitude lower than the electrical resistance of each separate overhead contact line section (3, 3').

3. A railway infrastructure according to claim 1 or 2, **characterised in that** the linked overhead contact line sections (3, 3') are electrically coupled, and **in that** the at least one feeder cable (5) possesses an electrical resistance that is at least one magnitude lower than the electrical resistance of the overhead contact line (3).

4. A railway infrastructure according to claim 1 or 2, **characterised in that** the linked overhead contact line sections (3, 3') are electrically insulated from each other.

5. A railway infrastructure according to one of the preceding claims, **characterised in that** the feeder cable (5) is located at the level of the rails (1).

6. A railway infrastructure according to claim 5, **characterised in that** the feeder cable (5) is provided between the rails (1).

7. A railway infrastructure according to one of the preceding claims, **characterised in that** near the ends of each overhead contact line section (3, 3'), the rails (1) are provided with electric cross-connections (2).

8. A railway infrastructure according to one of the claims 1-7, **characterised in that** the material on which the rails rest, forms an electrical insulation to the underground.

## Patentansprüche

1. Eisenbahn-Infrastruktur für ein Tram- oder Zugtransportsystem, welches Schienen (1) und eine Oberleitung (3) aufweist, um der Tram oder dem Zug, die über die Schienen (1) beweglich sind, eine elektrische Antriebsleistung zur Verfügung zu stellen, wobei die Oberleitung (3) Oberleitungsabschnitte (3,3') aufweist, die miteinander verbunden sind, wobei jede derselben einzeln mit wenigstens einem Speisekabel (5) verbunden ist,
**dadurch gekennzeichnet, dass**
jeder separate Oberleitungsabschnitt (3,3') an seinen zwei Enden (4,4',4") mit Verbindungsstücken (6',6") versehen ist, welche an einem Punkt (7) mit wenigstens einem Speisekabel (5) verbunden sind.

2. Eisenbahn-Infrastruktur nach Anspruch 1,
**dadurch gekennzeichnet, dass**
zwischen den Oberleitungsabschnitten (3,3') und dem wenigstens einen Speisekabel (5) Verbindungsstücke (6) vorgesehen sind, deren elektrischer Widerstand wenigstens eine Größenordnung niedriger ist als der elektrische Widerstand von jedem einzelnen Oberleitungsabschnitt (3,3').

3. Eisenbahn-Infrastruktur nach Anspruch 1 oder 2,
**dadurch gekennzeichnet, dass**
die verbundenen Oberleitungsabschnitte (3,3') elektrisch gekoppelt sind, und dass das wenigstens eine Speisekabel (5) einen elektrischen Widerstand aufweist, der wenigstens eine Größenordnung niedriger ist als der elektrische Widerstand der Oberleitung (3).

4. Eisenbahn-Infrastruktur nach Anspruch 1 oder 2,
**dadurch gekennzeichnet, dass**
die miteinander verbundenen Oberleitungsabschnitte (3,3') elektrisch voneinander isoliert sind.

5. Eisenbahn-Infrastruktur nach einem der vorhergehenden Ansprüche,
**dadurch gekennzeichnet, dass**
das Speisekabel (5) auf der Ebene der Schienen (1) angeordnet ist.

6. Eisenbahn-Infrastruktur nach Anspruch 5,
**dadurch gekennzeichnet, dass**
das Speisekabel (5) zwischen den Schienen (1) angeordnet ist.

7. Eisenbahn-Infrastruktur nach einem der vorhergehenden Ansprüche,
**dadurch gekennzeichnet, dass**
nahe den Enden von jedem Oberleitungsabschnitt (3,3') die Schienen mit elektrischen Querverbindungen (2) versehen sind.

8. Eisenbahn-Infrastruktur nach einem Ansprüche 1 bis 7,
**dadurch gekennzeichnet, dass**
das Material, auf welchem die Schienen aufliegen, eine elektrische Isolation gegenüber dem Untergrund bildet.

## Revendications

1. Infrastructure ferroviaire pour un système de transport par tram ou par train, comprenant des rails (1) et une ligne de contact aérienne (3) pour fournir une énergie d'entraînement électrique au tram ou au train pouvant se déplacer sur les rails (1), la ligne de contact aérienne (3) comprenant des sections de ligne de contact aérienne (3, 3') reliées les unes aux autres, chacune d'elles étant individuellement reliée à au moins un câble d'alimentation (5), **caractérisée en ce que** chaque section de ligne de contact aérienne (3, 3') distincte est pourvue, à ses deux extrémités (4, 4', 4"), de coupleurs (6', 6") qui sont reliés, à un point (7), à l'au moins un câble d'alimentation (5).

2. Infrastructure ferroviaire selon la revendication 1, **caractérisée en ce que** des coupleurs (6) sont fournis entre les sections de ligne de contact aérienne (3, 3') et l'au moins un câble d'alimentation (5), dont la résistance électrique est inférieure d'au moins une grandeur à la résistance électrique de chaque section de ligne de contact aérienne (3, 3') distincte.

3. Infrastructure ferroviaire selon la revendication 1 ou 2, **caractérisée en ce que** les sections de ligne de contact aérienne (3, 3') reliées sont électriquement couplées, et **en ce que** l'au moins un câble d'alimentation (5) possède une résistance électrique qui est inférieure d'au moins une grandeur à la résistance électrique de la ligne de contact aérienne (3).

4. Infrastructure ferroviaire selon la revendication 1 ou 2, **caractérisée en ce que** les sections de ligne de contact aérienne (3, 3') reliées sont électriquement isolées l'une de l'autre.

5. Infrastructure ferroviaire selon l'une quelconque des revendications précédentes, **caractérisée en ce que** le câble d'alimentation (5) est situé au niveau des rails (1).

6. Infrastructure ferroviaire selon la revendication 5, **caractérisée en ce que** le câble d'alimentation (5) est fourni entre les rails (1).

7. Infrastructure ferroviaire selon l'une quelconque des revendications précédentes, **caractérisée en ce que**, à proximité des extrémités de chaque section de ligne de contact aérienne (3, 3'), les rails (1) sont pourvus de d'interconnexions électriques (2).

8. Infrastructure ferroviaire selon l'une quelconque des revendications 1 à 7, **caractérisée en ce que** le matériau sur lequel les rails reposent forme une isolation électrique avec le sous-sol.
